Europäisches Patentamt

European Patent Office

Office européen des brevets

(11) Publication number: **0 105 568**
**A1**

(12) **EUROPEAN PATENT APPLICATION**

(21) Application number: **83201418.7**

(22) Date of filing: **03.10.83**

(51) Int. Cl.³: **A 01 G 9/22**

(30) Priority: **04.10.82 NL 8203853**

(43) Date of publication of application:
**18.04.84 Bulletin 84/16**

(84) Designated Contracting States:
**BE DE FR GB LU NL SE**

(71) Applicant: **Prins N.V.**
**Rondweg 35**
**NL-9101 BE Dokkum(NL)**

(72) Inventor: **Baalbergen, Hendrik**
**Burg. de Vriesstraat 15**
**NL-9101 DJ Dokkum(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **Insulation system.**

(57) An insulation system for glass buildings, in particular suitable for greenhouses. Pairs of parallel rails are provided over the roofs of the buildings, between which rigid insulating panels can be slid which in the operative position link up with each other to form a closed insulating cover. The panels are preferably hinged together so that they can be folded accordion-fashion. Similar insulating panels can be provided at the outside of the buildings between rails arranged along the side walls and end walls of the buildings.

FIG.1A

EP 0 105 568 A1

Insulation system.

This invention relates to an insulation system for glass buildings, in particular suitable for greenhouses.

It is known that a major portion of the heat generated by greenhouse heating installations is lost via the glass greenhouse roofs and walls, with high losses of energy particularly at night. A similar effect occurs with other glass structures such as light domes of production halls and the like.

It has been tried in the past to limit such losses of energy by using, for example, plastics channel plates, insulating glass, or coated glass. Although in this way heat losses can indeed be limited somewhat, results still leave much to be desired. In addition, these insulating greenhouse coverings are relatively expensive and lead to loss in light during the day, which results in production losses.

Furthermore, the use of transparent insulating greenhouse coverings leads to higher relative air humidity within the greenhouse. As nightly heat radiation is mainly from the crop, which as a consequence becomes colder than the ambient air, condensate is more liable to form on the crop. This increases the risk of fungal diseases.

In Netherlands patent application 272817, it has been proposed to minimize, for one thing, heat loss through glass roofs of greenhouses interior swing-aside screens. One disadvantage of this system is that these prior screens cause light losses even if their swung-aside position. Furthermore, the prior screens require a large number of fittings for attachment and actuation, which also cause light losses.

It is an object of the present invention to provide an insulation system which does not have the above disadvantages, and leads to a greater reduction in energy losses than do the prior systems and in addition provides light gain in that fewer heating tubes are required.

For this purpose, according to the invention, an insulation system of the kind described is characterized by parallel rails arranged to extend over the roofs of the buildings, and rigid insulation panels arranged to be slidable between each pair of rails and, in their operative position, linking up with each other to form a closed insulating cover.

According to a further elaboration of the invention, the outer walls of the glass buildings can be similarly insulated.

Some embodiments of the invention will now described in more detail, by way of example, with reference to the accompanying drawings.

In said drawings

Fig. 1 shows diagrammatically, in cross-sectional view (A) and longitudinal sectional view (B) a "Venlo" type of greenhouse provided with insulation according to the invention;

Fig. 2 diagrammatically shows a greenhouse of the so-called broad roof type in longitudinal sectional view (A) and cross-sectional view (B) provided with insulation according to the invention;

Fig. 3 diagrammatically shows, in perspective view, an example of a pair of insulating panels according to the present invention;

Fig. 4 shows a detail of an insulating panel according to the present invention;

Fig. 5 diagrammatically illustrates the manner in which the insulating panels according to the invention are stored;

Fig. 6 shows a cross-sectional view of a roof-ridge member of a greenhouse provided with an insulation system according to the present invention;

Fig. 7 diagrammatically shows the manner in which the roof insulating panels and the side-wall insulating panels according to the invention can be connected together;

Fig. 8 shows an example of apparatus for positioning and removing insulating panels according to the present invention;

Fig. 9 shows diagrammatically two preferred embodiments (A and B, respectively) of a storage accommodation for insulating panels according to the invention with a Venlo type of greenhouse;

Fig. 10 diagrammatically shows a detail of an embodiment of a drive unit for positioning and removing insulating panels according to the invention;

Fig. 11 diagrammatically shows a detail of a storage accommodation according to the invention;

Fig. 12 diagrammatically illustrates the way in which wall insulating panels are placed in position;

Fig. 13 diagrammatically shows a dragger for sidewall insulating panels according to the invention; and

Fig.14 diagrammatically shows the way in which the driving motors for positioning and removing the insulating panels can be placed.

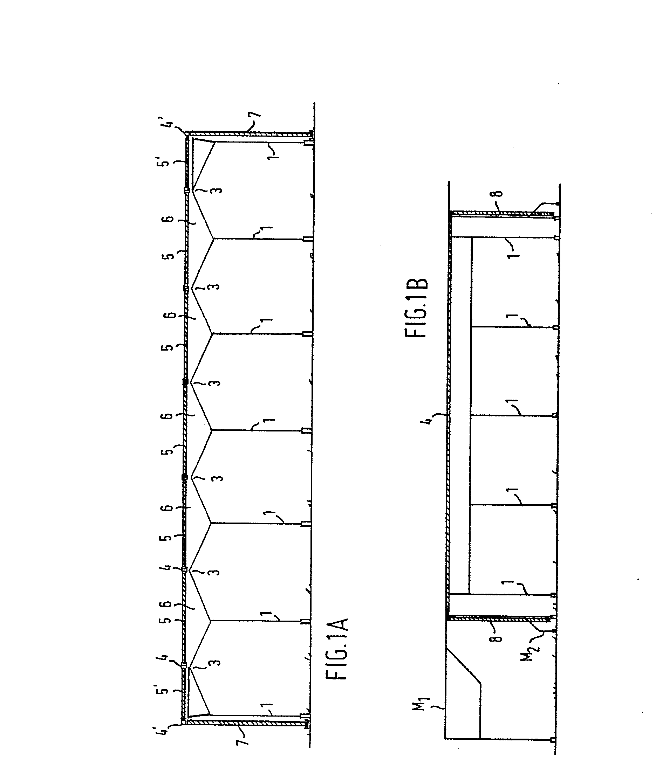

Fig. 1 diagrammatically shows, in cross-sectional view (Fig. 1A) and in longitudinal view (Fig. 1B) by way of example a greenhouse of the Venlo type with six roofs located in side-by-side relationship. In practice, however, the insulating system according to the invention will often be used for greenhouses with a larger number of roofs. The roofs are supported on uprights 1 and each consist of two slopes forming a ridge 3. According to the invention, placed on each ridge is a rail 4, I-shaped in cross-section. As, normally, the ridges are already formed by a metal section, the I-shaped rail may, if desired, form part of the ridge section. When new greenhouses are built, such an embodiment is preferred, but if the insulating system according to the invention is to be applied to existing greenhouses, the use of loose rails is preferred, which are secured to existing ridge sections in any suitable manner. Insulating panels can be slid between each pair of rails. The insulating panels inserted between rails 4 are designated by 5 in Fig.1. As, in this example, the panels 5 extend in a horizontal position, free , triangular spaces 6 are formed between the panels and the roof slopes, which are used for venting the interior of the greenhouse. For this purpose the usual vents can be opened.

The two outermost roof slopes can.be insulated similarly by mounting extra rails 4' on separate uprights placed in the outermost gutter of the greenhouse, and sliding insulating panels 5' between each outermost rail 4 and a rail 4'.As will be described in more detail hereinafter, rails 4'may also serve for guiding insulating panels 7 for the sidewalls.

Fig .1 B shows that, according to the invention, the end walls can be insulated with similar insulating panels 8, as will be described in more detail hereinafter. Insulating panels 8 for the end walls can be inserted from below upwardly. In the entirely closed condition, therefore, the greenhouse is completely insulated. In the nearly closed condition, ventilation of the triangular spaces 6 is possible.

Fig. 1B further shows diagrammatically a storage accommodation M1,to be more fully described hereinafter, for the roof panels,and a storage accommodation M2, also to be described more fully hereinafter, for the end walls panels.

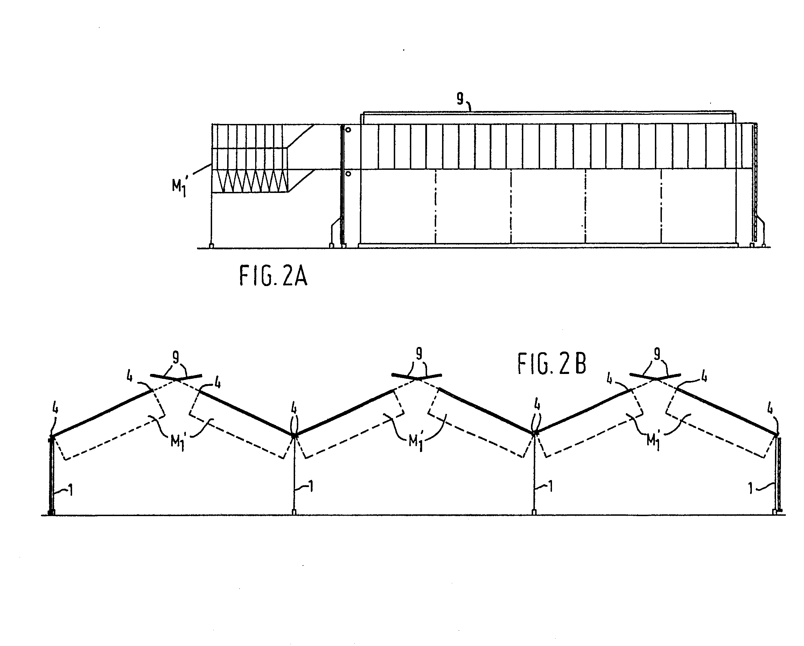

Fig. 2 shows in cross-sectional view (Fig. 2A) and in longitudinal sectional view (Fig. 2B) a greenhouse of the so-called broad-roof type. This type of greenhouse is generally provided with a continuous ridge vent, as shows at 9. Although, in principle, such a greenhouse can be provided with an insulating system similar to that shown in Fig. 1, this requires in connection with the continuous ridge vent and the large distance between the ridges, special provisions, such as additional uprights in the gutters.

Preferably, therefore, in the case of broad-roof type greenhouses, the insulating panels are mounted parallel to the roof slopes without covering the ventilators extending along the ridge. In this instance rails 4 are disposed above the gutters, which extend between each pair of roof slopes and at the level of the ventilator purlin. Naturally, the ventilator purlin can be designed so that it also forms the rail for the insulating panels.

If desired, the ventilators 9 themselves can be insulated in the traditional manner, for example, by means of plastics channel plates.

As the roof insulating panels in the insulating system shown for broad-roof type greenhouses are parallel to the roof slopes, the storage accommodations M1 should also be placed in an inclined position , as shown in Fig. 2. The insulating panels for the endwalls and the sidewalls can be mounted in a manner similar to that shown for the greenhouse illustrated in Fig. 1.

The roof and sidewall panels are preferably slid between the rails from one of the endwalls of the greenhouse, as will be described in more detail hereinafter. For this purpose, such a number of panels are coupled together as corresponds to the length of the greenhouse, which may be, for example, 75 m. If desired, for example, in the case of very long houses or other glass roofs, it is possible for the panels to be slid between the rails from both ends.

During the day time, the panels are removed and stored in front of the end wall of the greenhouse. For this purpose, the panels are preferably hinged together for them to fold accordion-wise. Furthermore, there is preferably provided a special unit , not shown in Figs. 1 and 2, but to be described more fully hereinafter, for positioning and removing the panels.

It should be noted that the rails may alternatively be mounted transversely to the longitudinal direction of the roof ridges. In that case the channels are stored near a sidewall of the greenhouse, and slid between the rails from

that position.

The panels to be used are rigid panels, which may consist, for example, of two parallel metal sheets with insulating plastics foam material sandwiched between them. In addition to providing an excellent heat-insulating effect, such panels provide an effective protection from weather influences, for example hail. The panels can be easily made of such a construction that the insulating cover formed by the panels can be walked on.

In principle, the panels could be loose panels, manually slid between the rails from one or two sides until they form a closed cover. This, however, is objectionable and time-consuming in the case of long greenhouses.

According to a further elaboration of the invention, the panels are hinged together, and a special motor-driven unit is used for sliding the panels between the rails and removing them again.

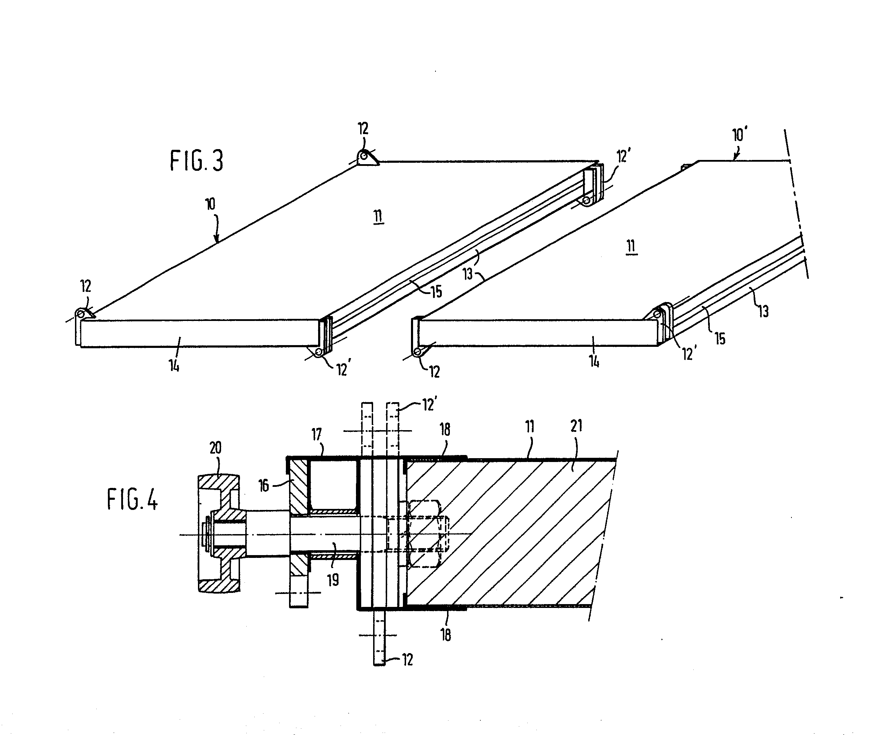

Fig. 3 diagrammatically shows, in perspective view, an example of a pair of panels 10, 10' according to the invention. Each of the panels comprises a housing 11, made for example of metal sheeting, and having the form of a flat box. Hinges 12,12' are provided on the box-shaped housings at two diagonally opposite edges, so that the hinges of one housing can be coupled to the corresponding hinges of the other housing by inserting a hinge pin not shown. In this way the panels can be laid one upon the other without being detached from each other, in the manner of an accordion wall.

The hinge axis is preferably spaced some distance above, or below, the panel surface, as shown in Fig.3, so that when the panels are folded together, some interspace is left between the panels. This prevents the hinges from being subjected to undue forces in case the panels are covered for example with snow when they are folded together.

The side edges 13, which in the operative condition are facing each other, are preferably provided with a molding 15, of synthetic plastics or rubber, secured to housing 11 to project somewhat from it, so that in the operative condition the panels are properly in contact with each other.

The box-shaped housings contain insulating material, for example polystyrene or polyurethane foam.

The side edges 14, which in the operative condition are facing the rails 4, may be open or closed as desired.

In a preferred embodiment, the side edges 14 which, in the operative condition, are facing rails 4, are provided with toothed racks for the transporation of the panels. With advantage, the hinges may be secured to these racks, and also, at each side edge 14 of a panel, at least one travelling roller arranged to cooperate with a rail 4.

Owing to the use of racks and the hinges secured to them there is, as it were, formed a long-link chain in which, during the movement of the channel into and out of their operative position, the forces are concentrated, so that the panels proper are not loaded.

All this is diagrammatically shown, by way of example, in Fig. 4, which shows a part-sectional view of an insulating panel according to the present invention.

Fig.4 shows the rack in cross-sectional view at 16. The rack is placed in a specially shaped molding 17, which has two lips 18 engaging around the insulating panel. Lips 18 may for example be riveted to the housing 11 of the insulating panel.

Furthermore, at least one bolt 19 extends through rack 16, which in the embodiment shown also serves to secure hinge 12. Furthermore, in this example, the bolt is prolonged to beyond the rack, and a travelling roller 20 of synthetic plastics material or other suitable material is secured to the end of the bolt. Hinge 12' is mounted in a similar manner. The insulating material of the panel is shown at 21.

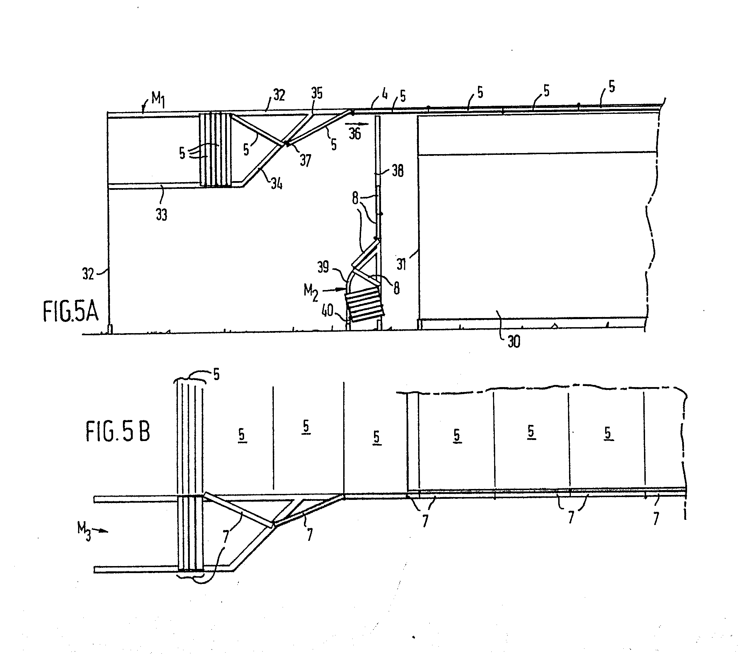

Fig. 5 diagrammatically shows in side-elavational view (Fig. 5A) the way in which the roof panels and the end wall panels can be stored in a storage accommodation, and in top plan view (Fig. 5B) the manner in which the sidewall panels can be stored in a storage accommodation.

Fig. 5A diagrammacially shows, similarly to Fig. 1B, a greenhouse 30 with an endwall 31. In front of the endwall, a storage accommodation M1, shown diagrammatically, is placed in one or more uprights 32. Each storage accommodation M1 comprises a pair of horizontal rails 32, coextensive with two rails 4 or 4 and 4',one of which rails 32 is visible.

Extending below, and parallel with, each rail 32 is a rail 33 which by means of a sloping rail 34 is coupled with rail 32  at some distance from the endwall.

Arranged at the junction 35 of rail 34 and rail 32 is a switch unit, not shown in Fig. 5, but shown in detail in Fig. 12, which ensures that a travelling roller of a roof panel alternately follows the straight path formed by rails 4 and 32 or the bent path formed by rails 32 and 34.

The switching unit shown in Fig. 12 is designed so that each side edge of a panel  facing rail 4 only needs to be provided with one travelling roller.

When the panels are moved into position on the greenhouse roof, the panels are moved in the direction of arrow 36 by apparatus to be described more fully hereinafter. In the situation shown, therefore, the travelling roller adjacent hinge 37 moves diagonally upwardly in rail 34, next passes the junction and moves further along rails 35 and 4. During this movement the next panel is pulled along, whose travelling roller moves along rails 32 and  4 in the direction of arrow 36. Each time when the travelling roller passes the junction 35, the points are reversed for them to assume the correct position to allow the passage of the next travelling roller.

When the roof panels are removed, the panels are moved in the direction of the storage accommodation, and the above actions take place in reverse order. As a consequence of the location of the hinges  shown in Fig. 3, the panels are stored in storage accommodation M1, folded upon each other   accordion-fashion.

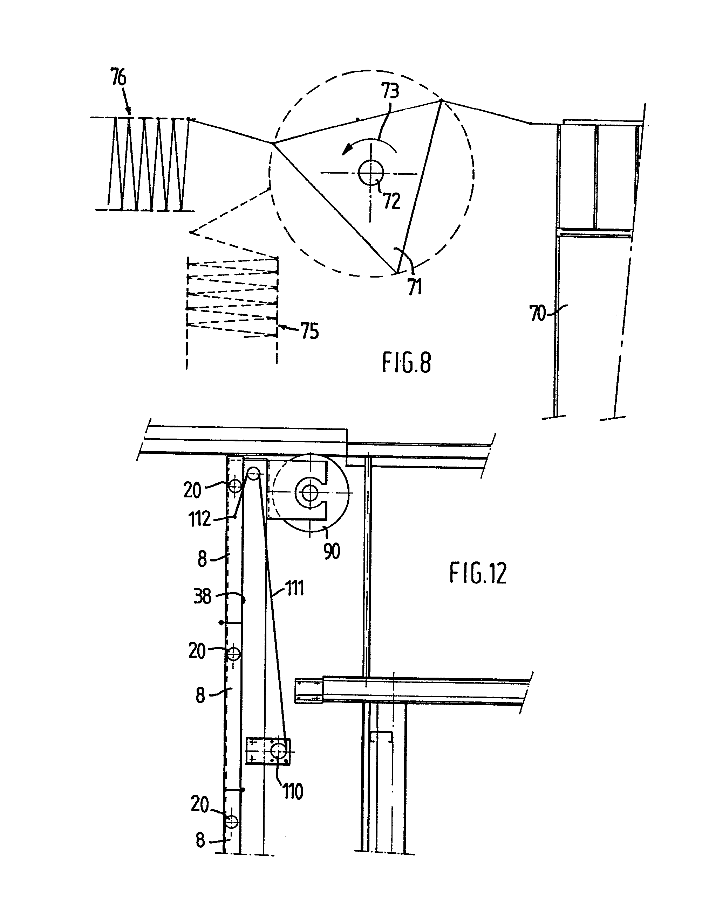

It is noted that a storage accommodation M1 is provided for each pair of rails 4 or 4 and 4'.In the example shown, the roof panels are stored in the vertical position. This has the advantage that people can walk in the space under the storage accommodation. It is also possible, however, for the roof panels to be stored in a vertically disposed storage accommodation  in horizontal position,as  shown diagrammatically in Fig. 8.

Fig. 5A further shows a storage accommodation M2 for the storage of the endwall insulating panels 28. These panels are designed similarly to the roof panels, and storage accommodation M2, too, is designed similarly to storage accommodation M1, with the difference that storage accommodation M2 is preferably placed in a vertical position, as shown.

Placed in front of endwall 31 are vertical rails 38, into which the travelling rollers of the panels fall. Connected to each vertical rail is a rail 39,directed diagonally downwardly from the endwall to link up with a vertical rail 40. At the junction between rails 39 and 38, a switch unit can be placed, but this is not strictly necessary, if it is ensured that the panels have a somewhat inclined rest position in storage accommodation M2, as indicated in the figure,

Fig. 5B shows,in plan view, a storage accommodation M3 for the storage of sidewall panels 7. Storage accommodation M3 is designed similarly to storage accommodation M1, but is placed on edge, because the travelling rollers of the side wall panels are now at the upper or underside of the panels and cooperate with horizontal rails. The junction 41 of the storage accommodation M3, comparable to junction 35 of storage accommodation M1, is also provided with a switch unit as shown in Fig. 12.

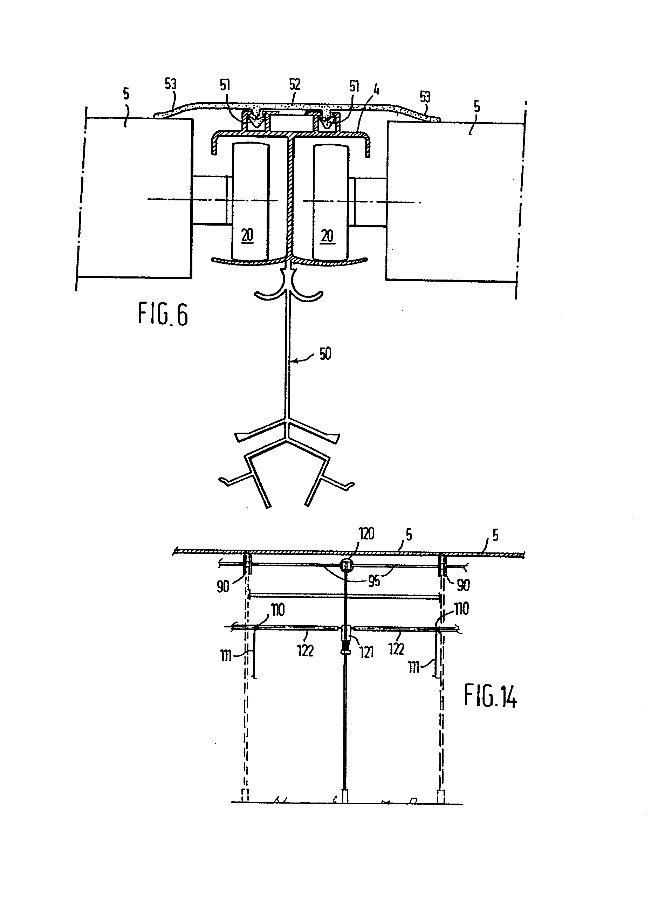

Fig. 6 shows an example of a ridge section 50 according to the invention, provided with a rail portion, with the portion added for the insulation panels being hatched.

In the embodiment shown, the top flange of the rail portion is provided with known per se facilities for attaching a slightly curved cover strip 52 of synthetic plastics or rubber and having projections 51 approximately mushroom-shaped in cross-section. The free edges 53 of the cover strip preferably rest somewhat resiliently on the top of panels 5 to produce a proper seal.

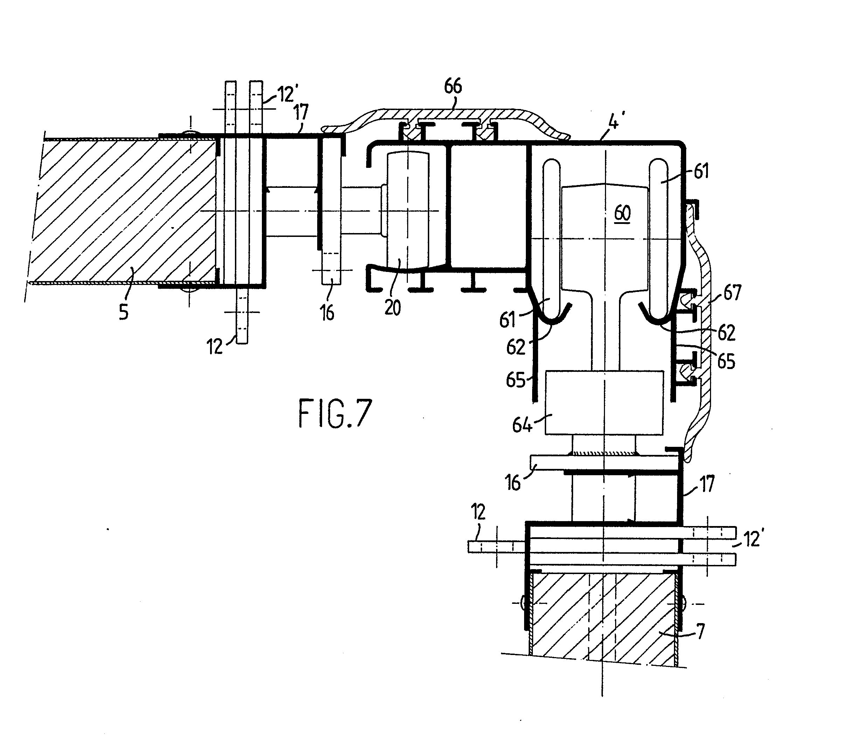

Fig. 7 shows diagrammatically in cross-sectional view a rail 4' designed so that it also serves to guide sidewall panels. In case no sidewall insulation is used, rail 4' may have the cross-sectional shape of one half of a rail 4.

Fig. 7 shows a sidewall panel 7 which is designed similarly to a roof panel or an endwall panel, but should be placed in position in suspended position, for which purpose it is provided with at least one upwardly extending roller carrier 60 provided on opposite sides with two vertical rollers 61 bearing on inwardly curved flanges 62 at the ends of the legs of a portion 63 of rail 4' inverted U-shaped in section.

Provided between rack 16 of the side wall panel and the roller carrier 60 is a thickened cylindrical member 64 extending between two depending vertical extension pieces 65 of the legs of the inverted U-section portion 63, and serving to provide additional guidance, and also to actuate the switch member of storage accommodation M3 for the sidewall panels.

In the same way as shown in Fig. 6, cover strips 66, 67 of synthetic plastics material or rubber are used to cover the gap between a roof panel 5 and rail 4', or to cover the gap between rail 4' and a sidewall panel 7.

It is noted that, if desired, a roller carrier similar to that at the top could be used at the bottom of a sidewall panel, but that it is also sufficient to use a horizontally placed roller comparable to rollers 20 of the roof panels.

Fig. 8 shows two possible ways, already mentioned above, of storing the insulating panels and an example of apparatus for moving the insulating panels into and out of their operative position.

A greenhouse is diagrammatically shown at 70. Positioned next to the greenhouse, in the example shown next to the endwall of the greenhouse, is an isosceles element 71,triangular in cross-section,arranged to be driven, in a manner not shown, for rotation about a central horizontal axis 72 as indicated by a double curved arrow 73. For moving the insulating panels into position on the greenhouse roof, the triangular element should rotate clockwise, and for the removal of the insulating panels rotation should be anti-clockwise. It is noted that when the triangular element is used the panels need not be provided with racks 16.

The triangular element is co-extensive with the gap between two rails 4. Accordingly, such a device is necessary for each pair of rails.

The length of the sides of the triangular element is twice the length of an insulating panel.

The central shaft 72 of the triangular element is, in this example, at such a level that, if the top side of the triangular element has a horizontal position, this top side is at approximately the same level as the under side of the insulating panels located between rails 4.

The insulating panels may be stacked either in the horizontal position to form a vertical stack, as shown at 75, or in a vertical position to form a horizontal packet in a storage accommodation according to Fig. 5A as shown at 76. In both cases the interconnected insulating panels are folded together accordion-fashion.

The latter possibility offers the advantage that a free walking space is left beside the greenhouse.

The width of the triangular element, i.e., the dimension transverse to the plane of the page, is less than the width of the insulating panels.

If, during the removal of the panels, it is ensured that the first panel assumes the correct position, the next panels automatically assume a correct position.

The insulating panel which when the panels are moved into their operative position on the greenhouse roof is the first to be passed between the rails, and accordingly, when the panels are removed from the greenhouse roof is the last to be removed, may be provided with hooks or like members for this panel to remain coupled with the triangular element when the other panels have been removed. When it is then decided for the panels to be re-positioned on the greenhouse roof, it is only necessary to actuate the drive motor of shaft 72. The first panel and the next panels are then automatically slid between rails 4. If desired, the drive motor may be provided, in any known manner, with an end switch, which automatically turns off the motor as soon as all the panels have been placed in position or have been removed.

It is also possible to provide means which, for example, in dependence upon the light intensity, automatically energize the drive motor for shaft 72.

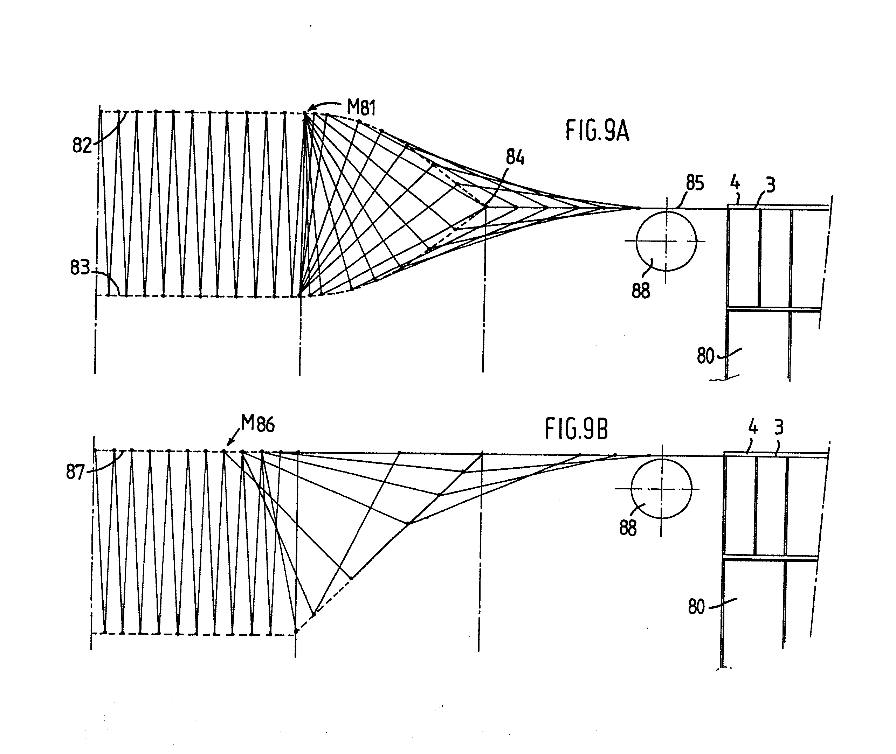

Fig. 9 diagrammatically illustrates the movement of the roof panels according to the invention into and out of position with two possible embodiments of a storage accommodation.

The storage accommodation shown in Fig. 9A leaves more free space vertically in front of the end wall of greenhouse 80 as the top of the storage accommodation is higher than ridge 3 of the greenhouse. Such a storage structure, however, is only suitable for the roof panels of Venlo-type greenhouses, because when used for the broad-roof type greenhouse, the storage accommodations are placed in an inclined position (see Fig. 2) and therefore no space is left near the gutters for any parts of the storage accommodation to extend above the greenhouse roof.

The use of the storage accommodation as shown in Fig. 9A for side wall panels and end wall panels is, in principle, possible, but could in certain situations cause lack of space. The type of storage accommodation M81 shown in Fig.9A comprises, in side-elevational view, a pair of horizontal, vertically spaced rails 82, 83, shown in broken lines, curved towards each other at some distance from the greenhouse to meet in a junction 84 located at the same level as rail 4 provided on the ridge of the greenhouse and connected therewith via a horizontal rail 85. At the junction 84 there is again provided a switch means or railway points mechanism.

In the storage accommodation type M86 shown in Fig. 9B, which is suitable for all types of greenhouse, the top rail 87 is co-extensive with ridge rail 4. It is noted that, in practice, struts may be provided between the upper and lower rails of the storage accommodation.

For the movement of the panels into and out of their operative position, there is in this embodiment provided a driven gear wheel 88, which is disposed in front of the end wall and cooperates with the racks of the panels.

Preferably, a plurality of gear wheels 88 are driven by means of a single, continuous shaft driven by a suitable electric motor.

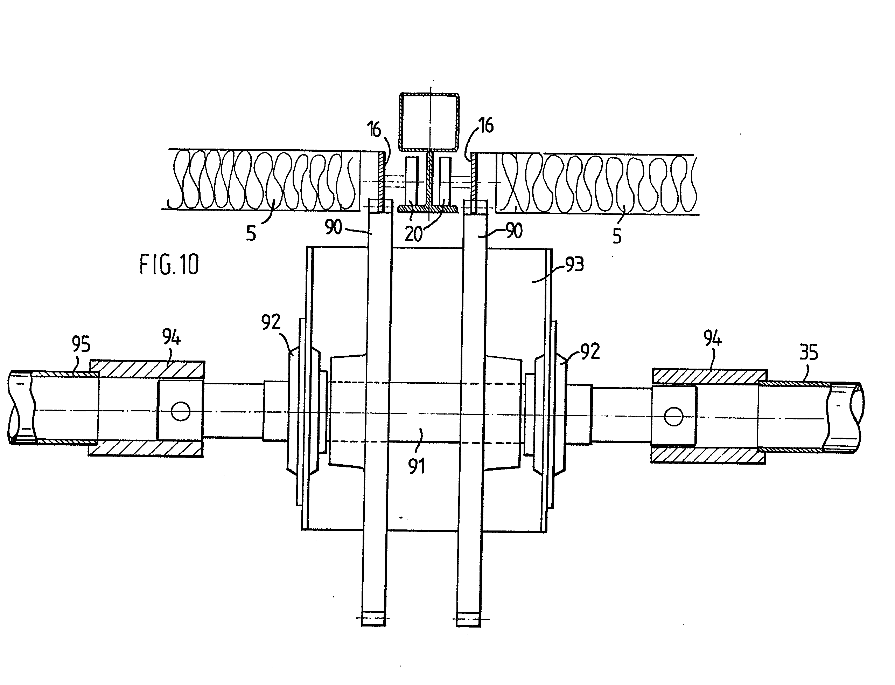

Fig. 10 shows a pair of such gear wheels 90, which cooperate with the racks 16 of side-by-side series of adjacent panels 5. The gear wheels are mounted on a shaft 91, in bearings 92 of a bracket 93. The ends of shaft 91 extending outside bracket 93 are coupled by means of bushings 94 to extension pieces 95 extending right and left, which in turn are coupled to other gear wheels or a drive motor.

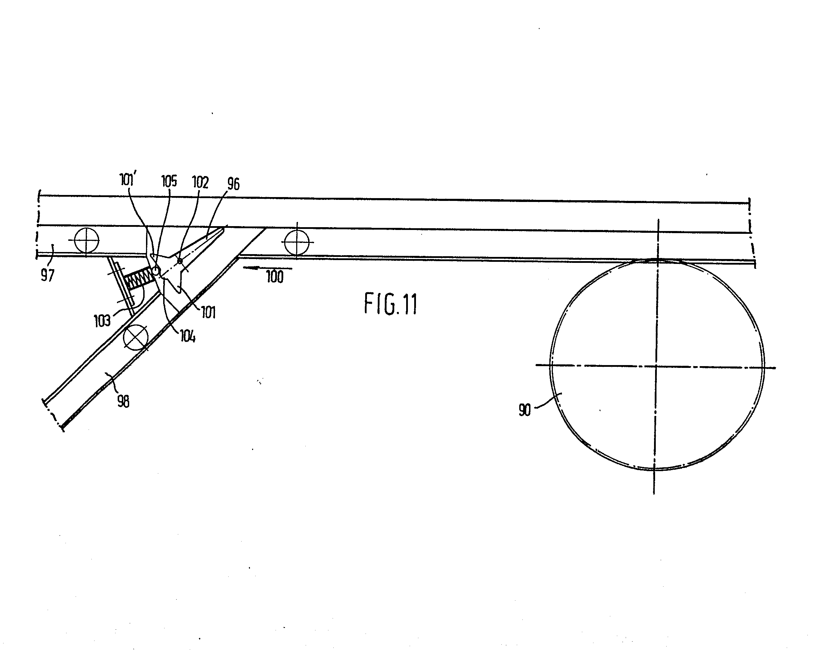

Fig. 11 shows the switch member, or railway points device, which comprises a wedge-shaped member 96 mounted for rotation in the junction of the upper rail 97 and rail 98 of a storage accommodation of type M86, connected obliquely to it. A similar switch member can be used for a storage accommodation of the type M81.

In the position of the switch member as shown, the passage to the oblique rail 98 is free.

If it is assumed that the travelling roller 99 of an insulating panel (which for clarity is not shown) moves in the direction of arrow 100 (this is the case when the panels are removed from the greenhouse), this roller 99 is forced by wedge member 96 to move obliquely downwardly. In so doing, the roller strikes a cam 101 of the wedge member. As a result the wedge member is turned clockwise about a fulcrum 102, so that the next travelling roller is forced to follow rail 97. This next travelling roller then strikes a cam 101', located opposite cam 101 so that the wedge member is turned to the position shown. In this way the insulating panels are automatically folded together accordion-shape fashion.

The wedge member is arrested in the two possible positions by means of a known per se arresting device 103, which comprises a ball 105, resting under spring pressure against the portion of the wedge member located intermediate cams 101 and 101', which portion is provided with a rounded projection 104.

Fig. 12 diagrammatically shows the way in which the end wall panels 8 can be moved into their operative position. In the embodiment shown, a driven reel 110 is mounted on an upright rail 38, the lower part of which, not shown, forms part of storage accommodation M2 (also see Fig. 5A). Lapped about the reel is a cable or chain 111, passing via a roller secured to the upper end of rail 38, and the free end of which is secured to the upper insulating pannel for the end wall at 112. The insulating panels are again provided with travelling rollers 20, engaging with rail 38. Racks are unnecessary for these panels.

By actuating the reel by means of a motor not shown, the panels can be hoisted out of storage accommodation M2 into the position shown, or lowered from the position shown into the storage accommodation. If ventilation of the greenhouse by way of the triangular space designated by 6 in Fig. 1A is desired, the panels can be moved into a lower position. Alternatively, the upper panel may be made of triangular shape.

As is the case with the gear wheels 90 cooperating with the roof panels, if more than one set of end wall insulating panels are used, a single drive motor can be used for a plurality of reels, with the reels being interconnected by means of intermediate shafts.

If desired, the insulating panels 7 for the side walls may be provided with racks and moved into and out of position by means of driven gear wheels similarly to the roof panels.

According to a further elaboration of the invention, the side wall panels are, however, preferably moved into and out of position simultaneously with the roof panels, whereby they are taken along by the roof panels.

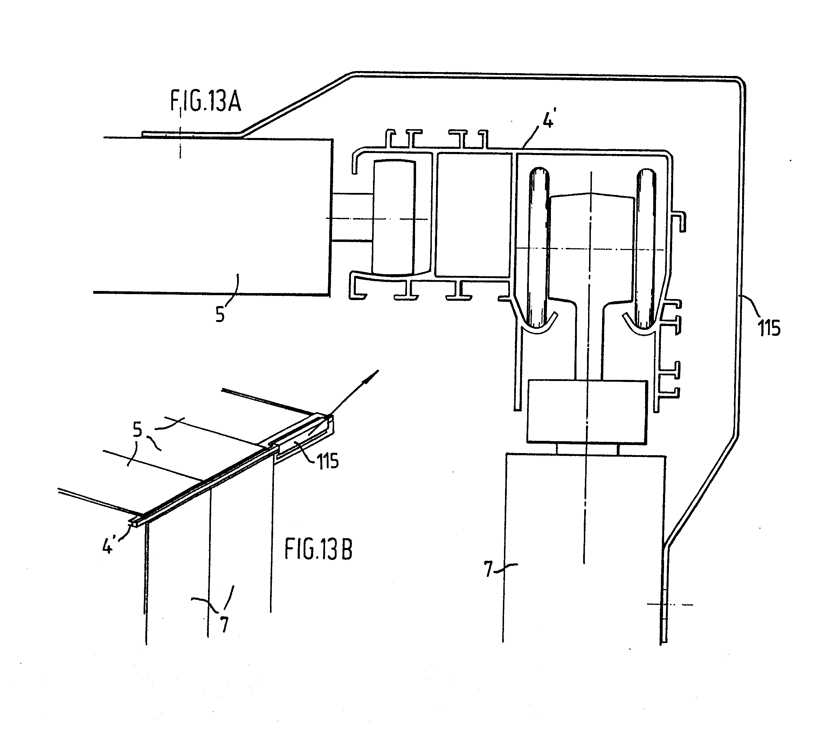

For this purpose the outermost roof panels are coupled to the side wall panels by means of a corner bracket 115, bridging rail 4'. All this is shown, in perspective view and in cross-sectional view, in Fig. 13A and Fig. 13B, respectively.

Fig. 14 diagrammatically shows the arrangement of the drive motors for respectively moving the roof and side wall panels and the end wall panels into and out of their operative positions.

Fig. 14 is an elevational view showing the end wall of a greenhouse. Shown at 120 is a motor for driving the gear wheels 90 cooperating with racks 16 of the roof panels. The motor is coupled with connecting shafts 95, shown in more detail in Fig. 10, and in this way drives a plurality, preferably all, of gear wheels 90 disposed at the end wall of a greenhouse.

Fig. 14 further shows a motor 121, placed in a lower position, which by means of connecting shafts 122 drives the reels 110 shown in Fig. 12.

It is noted that, after reading the foregoing, various structural modifications will readily occur to those skilled in the art. Thus, for example, it is conceivable for the roof panels to be provided at their bottom side with impressed corrugations arranged to cooperate with a driven roller provided with a corrugations for transporting the panels. The racks 16 can then be omitted.

It is also conceivable that, in certain situations, roof insulation is used only.

These and other modifications are deemed to be within the scope of the present invention.

0105568

CLAIMS.

1.      An insulation system for glass buildings,in particular suitable for greenhouses, characterized by pairs of parallel rails provided over the roofs of the buildings, and rigid  insulating panels adapted to be slid between each pair of rails and, in an operative position, linking up with each other to form a closed insulating cover.

2.      An insulation system according to claim 1,characterized in that the rails are provided on the ridges of the roofs and extend in the longitudinal direction of said ridges.

3.      An insulation system according to claim 1, characterized in that the rails extend transversely to the roof ridges and are secured to said ridges.

4.      An insulation system according toclaim 2, characterized in that the rails are formed integrally with conventional ridge section members for glass roofs.

5.      An insulation system accordingto claim 1, characterized in that the insulating panels each comprise two parallel hard sheets with insulating material sandwiched between them.

6.      An insulation system according to claim 5,characterized in that the insulating panels are provided adjacent to their corners with hinge members coupled with corresponding hinge members of an adjacent panel, said hinge members being positioned so that a series of insulating panels can be folded together accordion-fashion.

7.      An insulation system according to claim 6, characterized in that the axis of rotation of the hinge members is located outside the plane of the insulating panels.

8.      An insulation system according to claim 1, characterized by a motor-driven apparatus for sliding the insulating panels between the rails and removing the same.

9.      An insulation system according to claim 8, characterized in that said motor-driven apparatus comprises an element rotatable about a central shaft, said element having, in cross-section,the shape of an isosceles triangle, whose legs correspond in length to the length of two coupled insulating panels.

10. An insulation system according to claim 8, characterized in that the motor-driven apparatus comprises a toothed roller, whose teeth are arranged to cooperate with corrugations formed in the top or bottom side of the panels.

11. An insulation system according to claim 1, characterized by a storage accommodation for storing the insulating panels in the form of a vertical stack of horizontal panels.

12. An insulation system according to claim 1, characterized by a storage accommodation provided at the level of the rails in front of the roofs for storing the insulating panels in a packet of vertically positioned panels.

13. An insulation system according to claim 1, characterized in that the panels are provided at each of the sides facing a rail with at least one travelling roller engaging with said rail.

14. An insulation system according to claim 8, characterized in that the motor-driven apparatus comprises two gear wheels for each series of panels to be moved between two rails, said gear wheels being arranged to cooperate with racks arranged along the sides of the panels facing the rails.

15. An insulation system according to claim 14, characterized in that the racks are secured in a moulding having two lips engaging around the insulating panels, said lips being secured to the insulating panels.

16. An insulation system according to claim 15, characterized in that said moulding also mounts the hinge members by means of which the panels can be coupled together.

17. An insulation system according to claim 15, characterized by at least one shaft secured to each moulding, said shaft extending through the rack and carrying a travelling roller.

18. An insulation system according to claim 14, characterized in that the motor-driven apparatus comprises a motor coupled with at least one drive shaft arranged to drive a plurality of gear wheels associated with different series of panels.

19. An insulation system according to claim 12, characterized in that the storage accommodation comprises two upper parallel rails and two lower rails parallel thereto, each of said lower rails being connected to an associated one of said upper rails by means of a rail extending obliquely upwardly,and a switch member or railway points unit provided in the junction.

20. An insulation system according to claim 19, characterized in that each junction is coupled by means of a connecting rail to one of the rails arranged over the roofs, and that each insulating panel is provided with at least one travelling roller capable of cooperating with said rails, said switch member being arranged to be reversed by the passage of a travelling roller.

21. An insulation system according to claim 20, characterized in that the switch member comprises a rotatable wedge-element having a pointed side pointing to the connecting rail and a broad side carrying cams projecting on opposite sides thereof, said cams being engageable by a passing travelling roller to reverse the switch member,there being further provided an arresting device cooperating with said wedge-shaped element and capable of arresting the switch member in two positions.

22. An insulation system according to claim 1, characterized by at least two horizontal rails provided along the outside of at least one side wall of the glass buildings,including an upper rail extending at the level of the rails provided over the roofs, and a lower rail disposed adjacent to the bottom of the side wall, and by rigid insulating panels adapted to be slid between these rails.

23. An insulation system according to claim 22, characterized in that the insulating panels each comprise two parallel hard sheets with insulating material sandwiched between them.

24. An insulation system according to claim 23, characterized in that the insulating panels are provided adjacent to their corners with hinge members coupled with corresponding hinge members of an adjacent panel, said hinge members being positioned so that a series of insulating panels can be folded together accordion-fashion.

25. An insulation system according to claim 23, characterized in that the axis of rotation of the hinge members is located outside the plane of the insulating panels.

26. An insulation system according to claim 22, characterized by a motor-driven apparatus for sliding the insulating panels between the rails and removing the same.

27. An insulation system according to claim 22, characterized in that the upper rail for a side wall panel comprises an inverted U-shaped portion having depending legs curved with their ends towards each other to form a guide track for a roller member secured to an insulating panel.

28. An insulation system according to claim 27, characterized in that said roller member comprises a pair of vertical, parallel rollers rotatable about a horizontal shaft, said shaft being connected to the upper edge of a panel by means of an intermediate member.

29. An insulation system according to claim 28, characterized in that said intermediate member has a second cylindrical portion for operating a switch member of a storage accommodation for the side wall panels.

30. An insulation system according to claim 27, characterized in that said U-shaped member is formed integrally with the outermost rail arranged on the roofs.

31. An insulation system according to claim 22, characterized in that the side wall panels are connected to the panels to be moved over the roofs by means of a dragger bracket.

0105568

32.    An insulation system according to claim 31, characterized by a motor-driven apparatus for moving the side wall panels into and out of their operative position, said apparatus also serving for moving the roof panels into and out of their operative position.

33.    An insulation system according to claim 22, characterized by a storage accommodation for storing the side wall panels in a vertical position, folded accordion-fashion.

34.    An insulation system according to claim 1, characterized by vertical parallel rails, between which rigid insulating panels can be slid for at least one end wall, said vertical parallel rails being arranged at the outside of the glass building.

35.    An insulation system according to claim 34, characterized in that the insulating panels each comprise two parallel hard sheets with insulating material sandwiched between them.

36.    An insulation system according to claim 35, characterized in that the insulating panels are provided adjacent to their corners with hinge members coupled with corresponding hinge members of an adjacent panel, said hinge members being positioned so that a series of insulating panels can be folded together accordion-fashion.

37.    An insulation system according to claim 36, characterized in that the axis of rotation of the hinge members is located outside the plane of the insulating panels.

38.    An insulation system according to claim 34, characterized by a motor-driven apparatus for sliding the insulating panels between the rails and removing the same.

39.    An insulation system according to claim 38, characterized in that the motor-driven apparatus comprises reels, about which a cable is lapped, said cable being passed with its free end over a roller secured at the top of said vertical rails, and being connected to the uppermost panel for raising the same between the rails and for lowering the same into a storage accommodation.

40. An insulation system according to claim 34, characterized by a storage accommodation formed by the bottom part of each vertical rail, and a parallel rail portion co-planar therewith, said parallel rail portion having a bent part connected to said vertical rail, the insulating panels being arranged to be folded accordion-fashion within the storage accommodation to a stack of insulating panels.

41. An insulation system according to claim 1, for use with a greenhouse of the so-called broad-roof type, in which continuous ventilators are provided along the ridges of the roofs, and gutter sections between the roofs, characterized in that the rails extend parallel to ,and at a small distance above,said gutter sections, and parallel to ,and above,the ventilator purlins.

42. An insulation system according to claim 41,characterized in that each ventilator purlin and the associated rail are formed integrally with each other.

FIG.1A

FIG.1B

FIG. 2A

FIG. 2B

FIG.3

FIG.4

FIG.5A

FIG.5B

FIG.6

FIG.14

FIG.7

0105568

FIG.8

FIG.12

FIG.9A

FIG.9B

FIG.10

FIG.11

FIG.13A

FIG.13B

0105568

# EUROPEAN SEARCH REPORT

European Patent
Office

Application number

EP 83 20 1418

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-A-2 947 501 (BAUER) <br> * Page 17, last paragraph - page 23, 2nd paragraph; figures 1-4 * | 1,8,10 | A 01 G 9/22 |
| Y | FR-A-2 047 543 (TERLINDEN SÖHNE) <br> * Page 2, lines 17-37; figures 1,2 * | 1 | |
| A | DE-A-1 911 301 (RUGULLIS) <br> * Page 5, line 4 - page 6, line 21; figures 1,2,3 * | 1 | |

TECHNICAL FIELDS
SEARCHED (Int. Cl. ³)

A 01 G
E 04 B
E 04 H

The present search report has been drawn up for all claims

| Place of search <br> THE HAGUE | Date of completion of the search <br> 10-01-1984 | Examiner <br> HERYGERS J.J. |
|---|---|---|